# EUROPEAN PATENT SPECIFICATION

(11) **EP 4 418 711 B1**
(45) Date of publication and mention of the grant of the patent: **20.05.2026**
(21) Application number: 22897363.2
(22) Date of filing: 27.09.2022
(51) Int. Cl.: H04W 12/041, H04W 12/0431, H04W 12/062, H04W 36/00, H04W 36/08, H04W 84/12

(54) **ROAMING METHOD AND SYSTEM**
ROAMING-VERFAHREN UND -SYSTEM
PROCÉDÉ ET SYSTÈME D'ITINÉRANCE

(30) Priority: 23.11.2021 CN 202111395423
(43) Date of publication of application: 21.08.2024
(73) Proprietor: Huawei Technologies Co., Ltd., Shenzhen, Guangdong 518129 (CN)
(72) Inventor: HUANG, Chenji, Shenzhen, Guangdong 518129 (CN); SUN, Rongbin, Shenzhen, Guangdong 518129 (CN)
(74) Representative: Goddar, Heinz J.
(86) International application number: PCT/CN2022/121585
(87) International publication number: WO 2023/093277

(56) References cited:
- CN-A- 102 883 316
- CN-A- 103 096 307
- CN-A- 103 888 941
- CN-A- 105 848 131
- CN-A- 106 941 405
- CN-A- 107 690 138
- CN-A- 107 690 138
- CN-A- 111 083 804
- US-A1- 2008 072 047
- US-A1- 2017 134 940
- US-A1- 2021 345 105
- NOKIA NETWORKS: "Security and authentication in LWA", 3GPP DRAFT; R2-156483 SECURITY AND AUTHENTICATION IN LWA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Anaheim, USA; 20151116 - 20151120, 6 November 2015 (2015-11-06), Mobile Competence Centre ; 650, route des Lucioles ; F-06921 Sophia-Antipolis Cedex ; France , XP051024579

## Description

### TECHNICAL FIELD

This application relates to the communications field, and in particular, to a roaming method and system.

### BACKGROUND

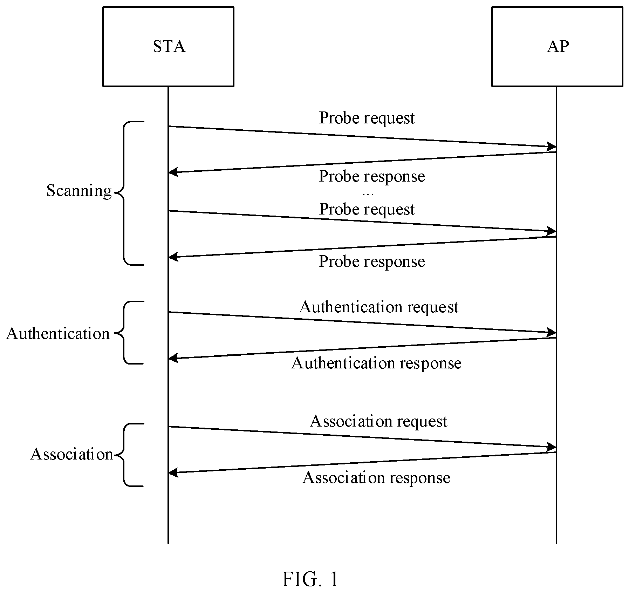

Before a station (Station, STA) formally transmits a data frame to an access point (Access Point, AP), access can be completed through three phases: scanning (SCAN), authentication (Authentication), and association (Association), as shown in FIG. 1. In the scanning phase, in a case that a wireless STA is set to a network node mode, according to MAC in Institute of Electrical and Electronics Engineers (Institute of Electrical and Electronics Engineers, IEEE) 802.11, two scanning modes, namely, an active scanning mode and a passive scanning mode, are used to search for an AP. In the active scanning mode, the STA sends probe request frames on 11 channels in sequence to search for APs on the channels. In the passive scanning manner, the STA passively waits for a Beacon frame regularly sent by an AP at intervals. The beacon frame provides information about the AP and information about a basic service set (basic service set, BSS) in which the AP is located. In the scanning phase, an AP list is scanned. The STA enters the authentication phase based on an AP selected by a user. In the authentication phase, the STA sends an authentication request (Authentication Request) to the AP, and the AP responds with an authentication response (Authentication Response) to complete link authentication. Only a STA that passes identity authentication is available for wireless access. Common authentication methods include open-system authentication (open-system authentication), shared-key authentication (shared-key authentication), Wi-Fi protected access (Wi-Fi Protected Access, WPA) PSK (Pre-shared key) authentication, and 802.1X (Extensible Authentication Protocol, EAP) authentication. When the AP returns authentication response information to the STA, and the identity authentication succeeds, a transmission system (transmission system) can record a location of each STA. In the association phase, the STA sends an association request to the AP, and the AP returns an association response to the STA. In this case, the access process is completed, the STA is initialized, and the STA may start to transmit the data frame to the AP. When a network is in an encryption mode, a fourth phase, namely, an extensible authentication protocol over local area network (local area network, LAN) (Extensible Authentication Protocol over LAN, EAPoL) four-way handshake, is required. The EAPoL four-way handshake is used for access authentication. The STA and AP can securely negotiate and exchange a pairwise transient key (Pairwise Transient Key, PTK) through the four-way handshake process. After the four-way handshake is complete, subsequent frame transmissions are performed in an encryption manner.

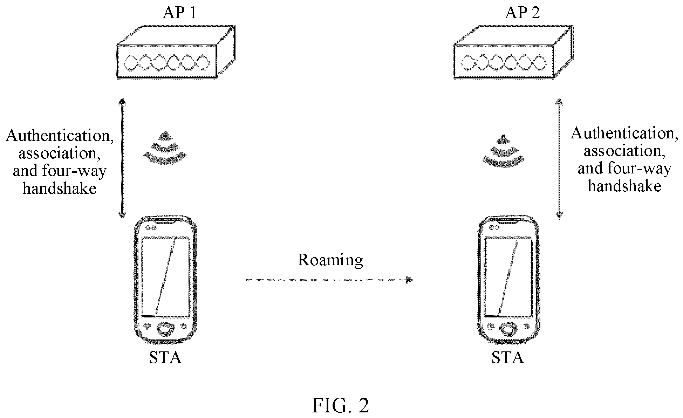

As described above, a wireless access process has many steps and is time-consuming. In a case in which retransmission of lost packets occurs, it may be evidently sensed that access time is long. In a distributed networking scenario, as shown in FIG. 2, when a STA connects to an AP, other APs cannot sense the connection. When the STA roams from one AP to another AP, re-association is required. The re-association action is as described above, which requires the authentication, the association, and the four-way handshake. In this way, even if the STA roams in a same network, an action and time required in a re-association process after the STA roams are the same as those required in a process of accessing a new network. As a result, the access process includes many steps and is time-consuming.

US 2008/072047 A1 describes a method for a mobile station to perform intra-domain inter-access controller authentication using an 802.11r protocol in CAPWAP architecture. The access controller is the authenticator that is configured to store a top-level and second-level shared authentication keys in a key hierarchy defined in 802.11r. The mobile station first-time association and re-association after inter-access-point handoff can be performed through authentication request/response message exchange between the mobile station and the access controller. The new access controller after handoff gets top-level key from the old access controller called an anchor authenticator. The mobile station and the new access controller generate a new second-level key and session key to complete the authentication.
CN 107690138 A describes a roaming method, wherein a device obtains feature information of a first AP. The device sends the feature information of the first AP to a STA after determining that the STA accesses a second AP. The STA generates and sends a random number and generates PTKs. The device obtains the feature information of the STA. The device sends the feature information of the STA to the first AP. The first AP generates the PTKs, and link authentication, access authentication and key negotiation are finished. The STA sends data messages encrypted through adoption of the PTKs to the first AP after determining switching to the first AP. The first AP decrypts the encrypted data messages through adoption of the PTKs. The first AP finishes association according to whether the internal information of the decrypted data messages is consistent or not.

### SUMMARY

Embodiments of this application provide a roaming method, to reduce roaming access duration.
The invention is defined by the independent claims. Advantageous embodiments of the invention are given by the dependent claims.

According to a first aspect, a roaming system is provided, including a main control device and a plurality of access points APs controlled by the main control device, where the plurality of APs include a first AP and a second AP. The main control device is configured to generate key information, where the key information includes a first random number, a second random number, an AP address, and a pairwise master key PMK, and the main control device is further configured to send the key information to the first AP and the second AP. The first AP and the second AP are configured to receive the key information from the main control device. The first AP and the second AP are separately configured to generate a pairwise transient key PTK based on the key information. The first AP is further configured to send the first random number, the second random number, and the AP address to a STA after receiving a first association request packet from the station STA, where the first random number, the second random number, and the AP address are used by the STA to generate the PTK, wherein the PTK generated by the STA is the same as the PTK generated by each of the first AP and the second AP. The second AP is further configured to: when the STA moves from an area covered by the first AP to an area covered by the second AP, receive a second association request packet sent by the STA, determine that the STA is a STA that has accessed the AP controlled by the main control device, and send a second association response packet to the STA, where the second association response packet indicates that the STA has accessed the second AP. The second AP is further configured to communicate with the STA based on the PTK.

With reference to an implementation of the first aspect, in a first possible implementation of the first aspect, the first AP is configured to send the second random number and the AP address to the STA via a first association response packet, and send the first random number to the STA according to an extensible authentication protocol over LAN EAPoL.

With reference to the first aspect or the first possible implementation of the first aspect, in a second possible implementation, that the first AP is further configured to send the first random number, the second random number, and the AP address to a STA after receiving a first association request packet from the station STA includes: The main control device is configured to forward the first random number, the second random number, and the AP address to the STA via the first AP after the first AP receives the first association request packet from the station STA.

With reference to the first aspect or either of the first and the second possible implementations of the first aspect, in a third possible implementation, the main control device is configured to send the second random number and the AP address to the STA via a first association response packet, and send the first random number to the STA according to an extensible authentication protocol over LAN EAPoL.

With reference to the first aspect or any one of the first to the third possible implementations of the first aspect, in a fourth possible implementation, the second association request packet carries information indicating that the STA requests fast access.

With reference to the first aspect or any one of the first to the fourth possible implementations of the first aspect, in a fifth possible implementation, the second association response packet carries information indicating that the second AP allows the fast access of the STA.

With reference to the first aspect or any one of the first to the fifth possible implementations of the first aspect, in a sixth possible implementation, the AP address is a media access control (media access control, MAC) address of the main control device, or the AP address is a pre-configured address.

With reference to the first aspect or any one of the first to the sixth possible implementations of the first aspect, in a seventh possible implementation, the first AP and the second AP are further separately configured to generate the PTK based on a STA address of the STA; the first AP is configured to obtain the STA address when the STA accesses the first AP; and the second AP is configured to obtain the STA address via the second association request packet, or obtain the STA address via the main control device.

With reference to the first aspect or any one of the first to the seventh possible implementations of the first aspect, in an eighth possible implementation, the STA is further configured to generate the PTK based on the STA address of the STA and a PMK input by a user, where the PMK input by the user is the same as the PMK generated by the main control device.

With reference to the first aspect or any one of the first to the eighth possible implementations of the first aspect, in a ninth possible implementation, the main control device is further configured to: before the STA moves from the area covered by the first AP to the area covered by the second AP, determine that a received signal strength indicator RSSI of the STA decreases, and determine, based on RSSIs of the plurality of APs, that the STA is to roam to the second AP.

With reference to the first aspect or any one of the first to the ninth possible implementations of the first aspect, in a tenth possible implementation, before the second AP receives the second association request packet sent by the STA, the first AP is further configured to indicate the STA to switch to the second AP; and the first AP is further configured to: after the STA accepts the switching to the second AP, send, to the main control device, information indicating that the STA has migrated out of the first AP.

With reference to the first aspect or any one of the first to the tenth possible implementations of the first aspect, in an eleventh possible implementation, the second AP is configured to query, based on an identifier that is of the STA and that is in the second association request packet, the main control device for determining whether the STA is the STA that has accessed the AP controlled by the main control device.

According to a second aspect, a roaming method is provided, including: A main control device generates key information, where the key information includes a first random number, a second random number, an AP address, and a pairwise master key PMK. The main control device sends the key information to a first access point AP and a second AP, where the first AP and the second AP are controlled by the main control device. The first AP and the second AP receive the key information from the main control device. The first AP and the second AP separately generate a pairwise transient key PTK based on the key information. The first AP sends the first random number, the second random number, and the AP address to a STA after receiving a first association request packet from the station STA, where the first random number, the second random number, and the AP address are used by the STA to generate the PTK. The PTK generated by the STA is the same as the PTK generated by each of the first AP and the second AP. When the STA moves from an area covered by the first AP to an area covered by the second AP, the second AP receives a second association request packet sent by the STA, determines that the STA is a STA that has accessed an AP controlled by the main control device, and sends a second association response packet to the STA, where the second association response packet indicates that the STA has accessed the second AP. The second AP communicates with the STA based on the PTK.

According to a third aspect, a roaming method is provided, including: A second access point AP receives key information from a main control device, where the key information includes a first random number, a second random number, an AP address, and a pairwise master key PMK, and the key information is used by the second AP to generate a pairwise transient key PTK. The second AP is controlled by the main control device. The second AP receives an association request packet from a station STA, determines that the STA is a STA that has accessed an AP controlled by the main control device, and sends an association response packet to the STA, where the association response packet indicates that the STA has accessed the second AP. The second AP communicates with the STA based on the PTK.

According to a fourth aspect, a roaming method is provided, including: A STA sends a first association request packet to a first AP. After sending the first association request packet to the first AP, the STA receives a first random number, a second random number, and an AP address from the first AP. The STA uses the first random number, the second random number, and the AP address to generate a PTK. The STA communicates with the first AP based on the PTK. When the STA moves from an area covered by the first AP to an area covered by a second AP, the STA sends an association request packet to the second AP, where the association request packet carries indication information, and the indication information is used by the second AP to determine that the STA is a STA that has accessed the first AP. The first AP and the second AP use a same PTK for communication with the STA. The STA receives an association response packet from the second AP, where the association response packet indicates that the STA has accessed the second AP. The STA communicates with the second AP based on the PTK, wherein the PTK used by the STA to communicate with the second AP is the same as the PTK used by the STA to communicate with the first AP.

According to a fifth aspect, a key generation method is provided, including: A main control device generates key information, where the key information includes a first random number, a second random number, an AP address, and a pairwise master key PMK. The main control device sends the key information to a first access point AP and a second AP, where the key information is used by the first AP and the second AP to separately generate a pairwise transient key PTK. The first AP and the second AP are controlled by the main control device.

According to a sixth aspect, a key generation method is provided, including: A first access point AP receives key information from a main control device, where the key information includes a first random number, a second random number, an AP address, and a pairwise master key PMK, the key information is used by the first AP to generate a pairwise transient key PTK, and the first AP is controlled by the main control device. When a station STA accesses the first AP, the first AP sends the first random number, the second random number, and the AP address to the STA, where the first random number, the second random number, and the AP address are used by the STA to generate the PTK.

According to a seventh aspect, a terminal device is provided, including a sending module and a receiving module. The sending module is configured to send, when the terminal device moves from an area covered by a first access point AP to an area covered by a second AP, an association request packet to the second AP, where the association request packet carries indication information, the indication information is used by the second AP to determine that a STA is a STA that has accessed the first AP, and the first AP and the second AP use a same pairwise transient key PTK for communication. The receiving module is configured to receive an association response packet from the second AP, where the association response packet indicates that the terminal device has accessed the second AP.

With reference to the seventh aspect, in a first possible implementation of the seventh aspect, the association request packet carries information indicating that the terminal device requests fast access.

With reference to the seventh aspect and the first possible implementation of the seventh aspect, in a second possible implementation, the association response packet carries information indicating that the second AP allows the fast access of the terminal.

With reference to the seventh aspect and the first and second possible implementations of the seventh aspect, in a third possible implementation, the indication information is an identifier of the terminal device.

With reference to the seventh aspect and the first to third possible implementations of the seventh aspect, in a fourth possible implementation, the identifier of the terminal device is a MAC address of the terminal device.

According to an eighth aspect, a computing device is provided. The computing device is configured to perform the method in one of the first aspect to the sixth aspect and the implementations of the first aspect.

According to technical solutions provided in embodiments of this application, the main control device generates the key information, and then synchronizes the key information to all access points controlled by the main control device, so that all the access points in a network use a same set of keys. This implements roaming access through only a one-way handshake in a roaming process, reduces steps and time for the roaming access, and enhances roaming experience.

### BRIEF DESCRIPTION OF DRAWINGS

To describe technical solutions in embodiments of this application or in a conventional technology more clearly, the following briefly describes the accompanying drawings used in describing the embodiments or the conventional technology.
FIG. 1 is a flowchart of an access process in a conventional technology;
FIG. 2 is a schematic diagram of a roaming method in a conventional technology;
FIG. 3 is a schematic diagram of a network architecture according to an embodiment of this application;
FIG. 4 is a flowchart of a roaming method according to an embodiment of this application;
FIG. 5 is a flowchart of a roaming decision according to an embodiment of this application;
FIG. 6 is a flowchart of roaming handover according to an embodiment of this application; and
FIG. 7 is a flowchart of a roaming method according to another embodiment of this application.

### DESCRIPTION OF EMBODIMENTS

Embodiments of this application provide a roaming system, so that a STA that has accessed a distributed network does not need to perform a process including authentication, association, and a four-way handshake again when roaming in the distributed network. This reduces roaming steps and time, and enhances roaming experience.

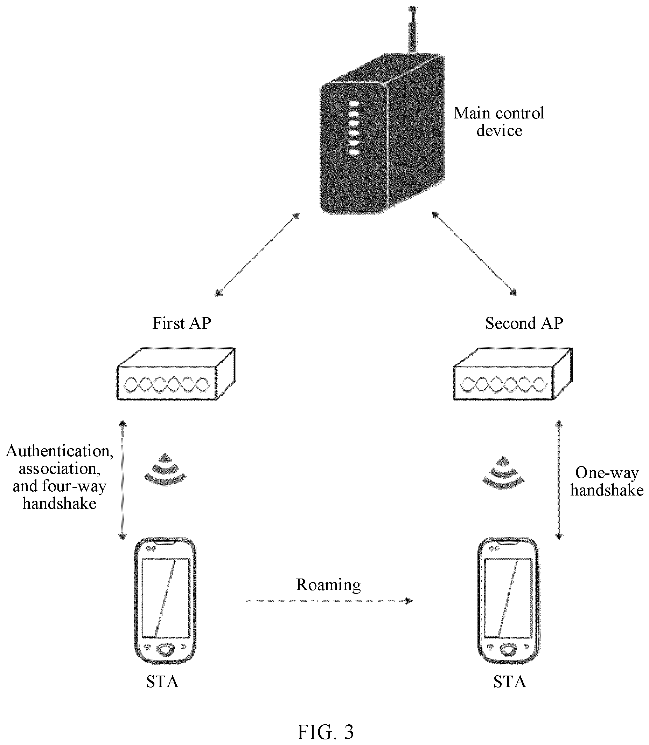

FIG. 3 is a schematic diagram of a network architecture according to an embodiment of this application. The network is a distributed network, and includes a main control device, a first AP, a second AP, and a STA. The first AP and the second AP are APs controlled by the main control device. The main control device may further control another AP, which is not shown in FIG. 3 temporarily. In the distributed network, the main control device may be a gateway. The STA may be a terminal device that supports Wi-Fi, for example, a mobile phone, a tablet computer, a wearable device, or a smart vehicle. When the STA in the network accesses the network for the first time (for example, the STAaccesses the first AP), an existing process including authentication, association, and a handshake may be used. When the STA roams, the STA may be connected to another AP (for example, the STA accesses the second AP) through a one-way handshake.

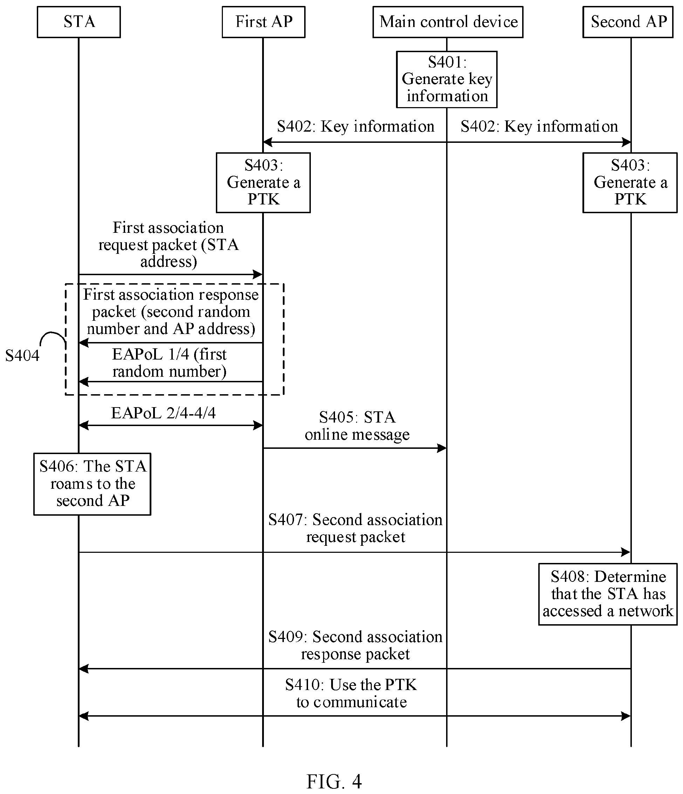

Based on the architecture in FIG. 3, FIG. 4 is a flowchart of a roaming method according to an embodiment of this application.

S401: The main control device generates key information, where the key information includes a first random number, a second random number, an AP address, and a pairwise master key (Pairwise Master Key, PMK).

The first random number is a random number (ANonce) of an AP, and the second random number is a random number (SNonce) of the STA. The AP address may be a media access control (Media Access Control, MAC) address of the main control device, or may be a pre-agreed fixed address.

S402: The main control device sends the key information to the first AP and the second AP.

S403: The first AP and the second AP separately generate a PTK based on the key information.

S404: After receiving a first association request packet from the STA, the first AP sends the first random number, the second random number, and the AP address to the STA. The STA generates a PTK based on the first random number, the second random number, the AP address, a STA address, and a PMK input by a user. The PMK input by the user is the same as the PMK generated by the main control device. The PTK generated by the STA is the same as the PTK generated by each of the first AP and the second AP in S403.

In S403, the first AP and the second AP further separately generate a PTK based on the STA address. The first AP obtains the STA address when the STA accesses the first AP. The first AP may obtain the STA address via a packet sent by the STA when the STA accesses the first AP, for example, an authentication request packet or an association request packet sent by the STA to the first AP. The second AP may obtain the STA address via the main control device, for example, the main control device broadcasts the STA address after the STA accesses the first AP. The second AP may alternatively obtain the STA address via a second association request packet in S407.

In S404, a process in which the STA accesses the first AP may be completed between the STA and the first AP by using an existing access process. If the STA does not support IEEE 802.11r, scanning, authentication, association, and a four-way handshake need to be performed. If the STA supports IEEE 802.11r, authentication and association are needed. For brevity, some steps in FIG. 4 are not shown.

In an implementation, the first AP sends the second random number and the AP address to the STA via a first association response packet, and sends the first random number to the STA by using a first step in an EAPoL four-way handshake. The first AP checks whether a message integrity check (Message Integrity Check, MIC) sent by the STA by using a second step of the EAPoL is correct. If the message integrity check is correct, the first AP and the STA may use the foregoing PTK for subsequent communication.

S405: The STA reports an online event to the main control device after accessing the first AP.

The main control device records the STA as a device that has accessed the network.

S406: The STA roams in the distributed network, and when the STA moves from an area covered by the first AP to an area covered by another AP (for example, an area covered by the second AP), a received signal strength indicator (received signal strength indicator, RSSI) decreases, and the main control device is triggered to perform a roaming decision. The main control device determines, based on RSSIs of a plurality of APs controlled by the main control device, an AP to which the STA is to roam.

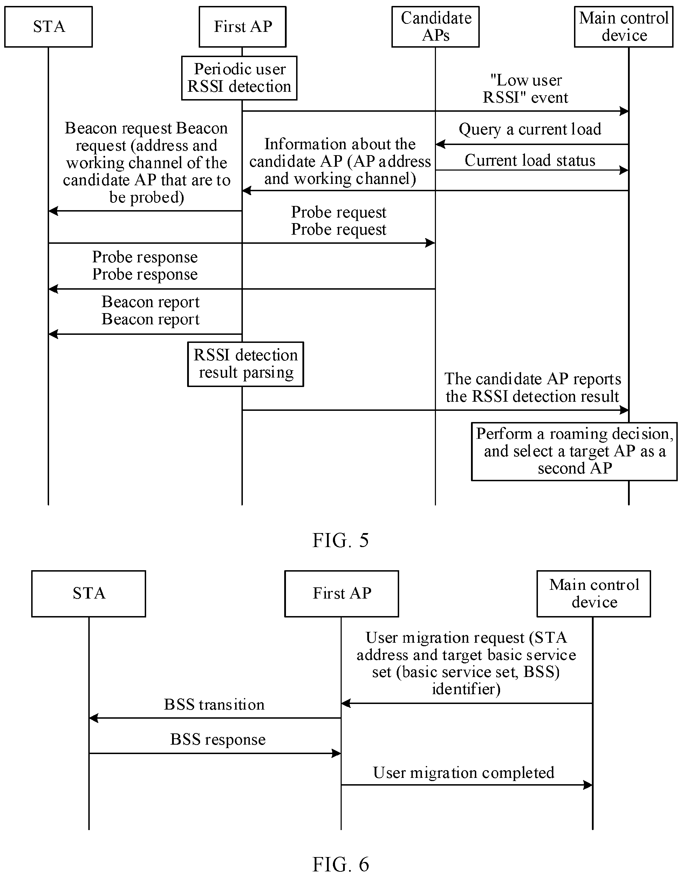

In this embodiment, an example in which the main control device determines that the AP to which the STA is to roam is the second AP is used for description. A specific process is shown in FIG. 5.

Based on a case whether the STA supports IEEE 802.11k and IEEE 802.11v, the STA performs roaming handover in two cases. When the STA does not support IEEE 802.11k and IEEE 802.11v, the first AP forcibly disconnects from the STA, and the STA selects another AP for connection. When the STA supports IEEE 802.11k and IEEE 802.11v, a specific process is shown in FIG. 6.

S407: The STA sends the second association request packet to the second AP to access the second AP.

The second association request packet carries information indicating that the STA requests fast access.

S408: The second AP determines that the STA is the device that has accessed the network.

Specifically, the second AP queries, based on the indication information carried in the second association request packet, the main control device for determining whether the STA has accessed the network. The indication information may be an identifier of the STA. For example, the second AP queries, based on a MAC address of the STA, the main control device for determining whether the STAhas accessed the network. The main control device determines, based on a list of devices that have accessed the network, that the STA is the device that has accessed the network.

S409: The second AP sends a second association response packet to the STA, where the second association response packet indicates that the STA has completed accessing the second AP.

Specifically, the second association response packet carries information indicating that the second AP allows the fast access of the STA.

The information in S408 indicating that the STA requests the fast access and the information in S409 indicating that the second AP allows the fast access of the STA may be carried in a dedicated IE field. A type-length-value (type-length-value, TLV) in the IE field includes an element identifier (Element ID), a field length (Length), and fast access status code (Fast Assoc Status Code). In an implementation, if a value of Fast Assoc Status Code is 1, it indicates that the STA requests the fast access to the AP. If a value of Fast Assoc Status Code is 2, it indicates that the AP allows the fast access of the STA. If a value of Fast Assoc Status Code is 3, it indicates that the AP rejects the fast access of the STA.

S410: Both the second AP and the STA use the PTK to communicate with each other.

In this embodiment of this application, the main control device generates the key information, and then synchronizes the key information to all access points controlled by the main control device, so that all the access points in the network use a same set of keys. This implements roaming access through only a one-way handshake in a roaming process, reduces steps and time for the roaming access, and enhances roaming experience.

A sequence of the foregoing steps may be changed. For example, step S403 in which the first AP generates the PTK based on the key information may be completed after S404 and before the first AP and the STA use the PTK for communication. For another example, step S403 in which the second AP generates the PTK based on the key information may be completed after S404 and before S410.

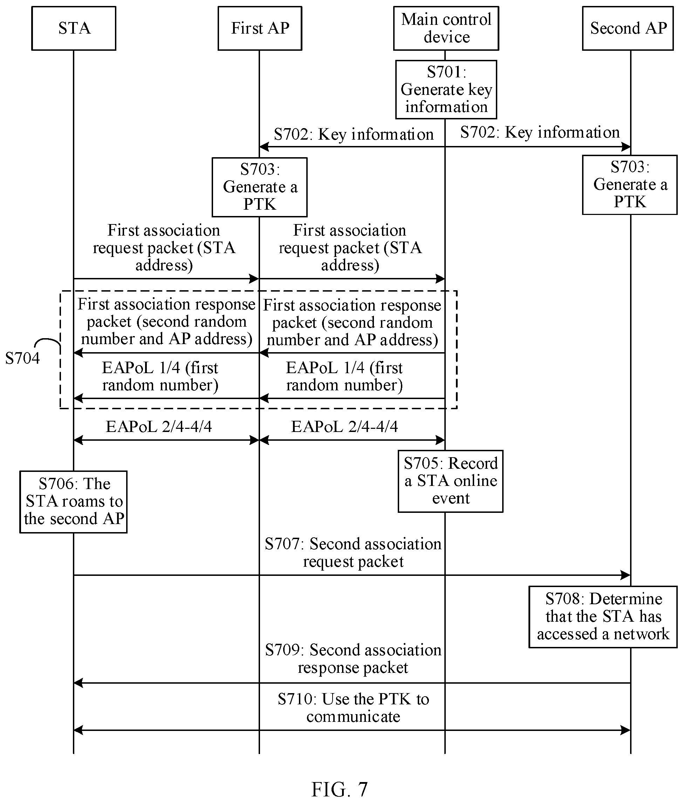

Based on the architecture in FIG. 3, FIG. 7 is a flowchart of a roaming method according to another embodiment of this application. Different from the embodiment in FIG. 4, an authentication process used when the STA accesses the first AP is completed between the STA and the first AP, and a process including association and a four-way handshake for key exchange is completed between the STA and the main control device.

S701: The main control device generates key information, where the key information includes a first random number, a second random number, an AP address, and a PMK.

S702: The main control device sends the key information to the first AP and the second AP.

S703: The first AP and the second AP separately generate a PTK based on the key information.

S704: After receiving a first association request packet from the STA, the first AP forwards the first association request packet to the main control device, and the main control device forwards the first random number, the second random number, and the AP address to the STA via the first AP. The STA generates a PTK based on the first random number, the second random number, the AP address, a STA address, and a PMK input by a user. The PMK input by the user is the same as the PMK generated by the main control device. The PTK generated by the STA is the same as the PTK generated by each of the first AP and the second AP in S703.

In S703, the first AP and the second AP further separately generate a PTK based on the STA address. The first AP obtains the STA address when the STA accesses the first AP. The first AP may obtain the STA address by receiving or forwarding a packet sent by the STA when the STA accesses the first AP, for example, receiving an authentication request packet sent by the STA to the first AP, and for another example, forwarding an association request packet to the main control device. The second AP may obtain the STA address via the main control device, for example, the main control device broadcasts the STA address after the STA accesses the first AP. The second AP may alternatively obtain the STA address via a second association request packet in S707.

In S704, the authentication process in which the STA accesses the first AP may be completed between the STA and the first AP by using an existing access process. Association and a four-way handshake for the STA are completed between the STA and the main control device, and the first AP forwards related information.

In an implementation, the main control device sends the second random number and the AP address to the STA via a first association response packet, and sends the first random number to the STA by using a first step in an EAPoL four-way handshake. The main control device checks whether an MIC sent by the STA by using a second step of the EAPoL is correct. If the MIC is correct, the first AP and the STAmay use the foregoing PTK for subsequent communication.

S705: After the STA accesses the first AP, the main control device records a STA online event.

S706: The STA roams in the distributed network, and when the STA moves from an area covered by the first AP to an area covered by another AP (for example, an area covered by the second AP), a received signal strength indicator (received signal strength indicator, RSSI) decreases, and the main control device is triggered to perform a roaming decision. The main control device determines, based on RSSIs of a plurality of APs controlled by the main control device, an AP to which the STA is to roam.

S707: The STA sends the second association request packet to the second AP to access the second AP.

S708: The second AP determines that the STA is a device that has accessed the network.

S709: The second AP sends a second association response packet to the STA, where the second association response packet indicates that the STA has completed accessing the second AP.

S710: Both the second AP and the STA use the PTK to communicate with each other.

For a specific process of S701 to S703, refer to S401 to S403 in the embodiment in FIG. 4. For a specific process of S705 to S710, refer to S405 to S410 in the embodiment in FIG. 4. Details are not described herein again.

In this embodiment of this application, the main control device generates the key information, and then synchronizes the key information to all access points controlled by the main control device, so that all the access points in the network use a same set of keys. This implements roaming access through only a one-way handshake in a roaming process, reduces steps and time for the roaming access, and enhances roaming experience.

## Claims

1. A roaming method, comprising:
receiving (S402, S702), by a second access point, AP, key information from a main control device, wherein the key information comprises a first random number, a second random number, an AP address, and a pairwise master key, PMK, wherein the second AP is controlled by the main control device;
generating, by the second AP, a pairwise transient key, PTK, based on the key information so that the generated PTK is identical to a PTK generated by a first AP controlled by the main control device;
receiving (S407, S707), by the second AP, a second association request packet from a station, STA;
determining (S408, S708), by the second AP, that the STA is a STA that has accessed the first AP;
sending (S409, S709), by the second AP, a second association response packet to the STA, wherein the second association response packet indicates that the STA has accessed the second AP; and
communicating (S410, S710), by the second AP, with the STA based on the PTK.

2. The method of claim 1, further comprising:
generating (S401, S701), by the main control device, the key information;
sending (S402, S702), by the main control device, the key information to the first AP and the second AP;
receiving (S402, S702), by the first AP, the key information from the main control device;
generating (S403, S703), by the first AP, the PTK based on the key information, wherein the first AP generates the PTK separately from the second AP; and
sending (S404, S704), by the first AP, the first random number, the second random number, and the AP address to the STA after receiving a first association request packet from the STA, wherein the first random number, the second random number, and the AP address are used by the STA to generate the PTK, wherein the PTK generated by the STA is the same as the PTK generated by each of the first AP and the second AP; and
wherein the second AP receives (S407, S707) the second association request packet from the STA when the STA moves (S406, S706) from an area covered by the first AP to an area covered by the second AP.

3. The method according to claim 2, wherein the first AP sends (S404, S704) the second random number and the AP address to the STA via a first association response packet, and sends (S404, S704) the first random number to the STA according to an extensible authentication protocol over LAN EAPoL.

4. The method according to claim 2, wherein the sending, by the first AP, the first random number, the second random number, and the AP address to the STA after receiving a first association request packet from the STA comprises:
forwarding (S704), by the main control device, the first random number, the second random number, and the AP address to the STA via the first AP after the first AP receives the first association request packet from the STA.

5. The method according to claim 4, wherein the main control device sends (S704) the second random number and the AP address to the STA via a first association response packet, and sends (S704) the first random number to the STA according to an extensible authentication protocol over LAN EAPoL.

6. The method according to any one of claims 1 to 5, wherein the second association request packet carries information indicating that the STA requests fast access.

7. The method according to any one of claims 1 to 6, wherein the second association response packet carries information indicating that the second AP allows the fast access of the STA.

8. The method according to any one of claims 1 to 7, wherein the AP address is a media access control MAC address of the main control device, or the AP address is a pre-configured address.

9. The method according to any one of claims 2 to 8, wherein the first AP and the second AP further separately generate (S403, S703) the PTK based on a STA address of the STA; the first AP obtains the STA address when the STA accesses the first AP; and the second AP obtains the STA address via the second association request packet, or obtains the STA address via the main control device.

10. The method according to any one of claims 9, wherein the STA further generates the PTK based on the STA address of the STA and a PMK input by a user, wherein the PMK input by the user is the same as the PMK generated by the main control device.

11. The method according to any one of claims 2 to 10, wherein the main control device further determines, before the STA moves from the area covered by the first AP to the area covered by the second AP, that a received signal strength indicator RSSI of the STA decreases, and determines, based on RSSIs of a plurality of APs, that the STA is to roam to the second AP.

12. The method according to any one of claims 2 to 11, wherein before the second AP receives (S407, S707) the second association request packet sent by the STA, the first AP further indicates the STA to switch to the second AP; and after the STA accepts the switching to the second AP, the first AP further sends, to the main control device, information indicating that the STA has migrated out of the first AP.

13. The method according to any one of claims 1 to 12, wherein the second AP queries, based on an identifier that is of the STA and that is in the second association request packet, the main control device for determining whether the STA is the STA that has accessed the AP controlled by the main control device.

14. A roaming method performed by a station, STA, the method comprising:
sending a first association request packet to a first access point, AP,
after sending the first association request packet to the first AP, receiving (S404, S704) a first random number, a second random number, and an AP address from the first AP;
using the first random number, the second random number, and the AP address to generate a pairwise transient key, PTK;
communicating with the first AP based on the PTK;
when the STA moves from an area covered by the first AP to an area covered by a second AP, sending (S407, S707) a second association request packet to the second AP, wherein the second association request packet carries indication information, and the indication information is to-be-used by the second AP to determine that the STA is a STA that has accessed the first AP;
receiving (S409, S709) an association response packet from the second AP, wherein the association response packet indicates that the STA has accessed the second AP; and
communicating (S410, S710) with the second AP based on the PTK, wherein the PTK used by the STA to communicate with the second AP is the same as the PTK used by the STA to communicate with the first AP.

15. A computing device configured to perform the method according to claim 1 or 14.

## Patentansprüche

1. Roaming-Verfahren, das umfasst:
Empfangen (S402, S702) von Schlüsselinformationen von einer Hauptsteuervorrichtung durch einen zweiten Zugangspunkt, AP, wobei die Schlüsselinformationen eine erste Zufallszahl, eine zweite Zufallszahl, eine AP-Adresse und einen paarweisen Hauptschlüssel, PMK, umfassen, wobei der zweite AP durch die Hauptsteuervorrichtung gesteuert wird;
Erzeugen, durch den zweiten AP, eines paarweisen transienten Schlüssels, PTK, basierend auf den Schlüsselinformationen, so dass der erzeugte PTK identisch mit einem PTK ist, der von einem ersten AP erzeugt wird, der von der Hauptsteuervorrichtung gesteuert wird;
Empfangen (S407, S707), durch den zweiten AP, eines zweiten Assoziationsanforderungspakets von einer Station, STA;
Bestimmen (S408, S708) durch den zweiten AP, dass die STA eine STA ist, die auf den ersten AP zugegriffen hat;
Senden (S409, S709) eines zweiten Assoziationsantwortpakets an die STA durch den zweiten AP, wobei das zweite Assoziationsantwortpaket anzeigt, dass die STA auf den zweiten AP zugegriffen hat; und
Kommunizieren (S410, S710) durch den zweiten AP mit der STA basierend auf dem PTK.

2. Verfahren nach Anspruch 1, das ferner umfasst:
Erzeugen (S401, S701) der Schlüsselinformation durch die Hauptsteuervorrichtung;
Senden (S402, S702) der Schlüsselinformationen durch die Hauptsteuervorrichtung an den ersten AP und den zweiten AP;
Empfangen (S402, S702) der Schlüsselinformationen von der Hauptsteuervorrichtung durch den ersten AP;
Erzeugen (S403, S703) des PTK durch den ersten AP basierend auf den Schlüsselinformationen, wobei der erste AP den PTK getrennt von dem zweiten AP erzeugt; und
Senden (S404, S704), durch den ersten AP, der ersten Zufallszahl, der zweiten Zufallszahl und der AP-Adresse an die STA nach Empfangen eines ersten Assoziationsanforderungspakets von der STA, wobei die erste Zufallszahl, die zweite Zufallszahl und die AP-Adresse von der STA verwendet werden, um den PTK zu erzeugen, wobei der von der STA erzeugte PTK derselbe ist wie der von jedem des ersten AP und des zweiten AP erzeugte PTK; und
wobei der zweite AP das zweite Assoziationsanforderungspaket von der STA empfängt (S407, S707), wenn sich die STA von einem durch den ersten AP abgedeckten Bereich zu einem durch den zweiten AP abgedeckten Bereich bewegt (S406, S706).

3. Verfahren nach Anspruch 2, wobei der erste AP die zweite Zufallszahl und die AP-Adresse über ein erstes Assoziationsantwortpaket an die STA sendet (S404, S704) und die erste Zufallszahl gemäß einem erweiterbaren Authentifizierungsprotokoll über LAN EAPoL an die STA sendet (S404, S704).

4. Verfahren nach Anspruch 2, wobei das Senden, durch den ersten AP, der ersten Zufallszahl, der zweiten Zufallszahl und der AP-Adresse an die STA nach dem Empfangen eines ersten Assoziationsanforderungspakets von der STA umfasst:
Weiterleiten (S704) der ersten Zufallszahl, der zweiten Zufallszahl und der AP-Adresse durch die Hauptsteuervorrichtung an die STA über den ersten AP, nachdem der erste AP das erste Assoziationsanforderungspaket von der STA empfangen hat.

5. Verfahren nach Anspruch 4, wobei die Hauptsteuervorrichtung die zweite Zufallszahl und die AP-Adresse über ein erstes Assoziationsantwortpaket an die STA sendet (S704) und die erste Zufallszahl gemäß einem erweiterbaren Authentifizierungsprotokoll über LAN EAPoL an die STA sendet (S704).

6. Verfahren nach einem der Ansprüche 1 bis 5, wobei das zweite Assoziationsanforderungspaket Informationen trägt, die anzeigen, dass die STA schnellen Zugang anfordert.

7. Verfahren nach einem der Ansprüche 1 bis 6, wobei das zweite Assoziationsantwortpaket Informationen trägt, die anzeigen, dass der zweite AP den schnellen Zugang der STA erlaubt.

8. Verfahren nach einem der Ansprüche 1 bis 7, wobei die AP-Adresse eine Medienzugriffskontroll(MAC)-Adresse der Hauptsteuervorrichtung ist, oder die AP-Adresse eine vorkonfigurierte Adresse ist.

9. Verfahren nach einem der Ansprüche 2 bis 8, wobei der erste AP und der zweite AP ferner separat den PTK basierend auf einer STA-Adresse der STA erzeugen (S403, S703); der erste AP die STA-Adresse erhält, wenn die STA auf den ersten AP zugreift; und der zweite AP die STA-Adresse über das zweite Assoziationsanforderungspaket erhält oder die STA-Adresse über die Hauptsteuervorrichtung erhält.

10. Verfahren nach einem der Ansprüche 9, wobei die STA ferner den PTK basierend auf der STA-Adresse der STA und einem von einem Benutzer eingegebenen PMK erzeugt, wobei der von dem Benutzer eingegebene PMK derselbe ist wie der von der Hauptsteuervorrichtung erzeugte PMK.

11. Verfahren nach einem der Ansprüche 2 bis 10, wobei die Hauptsteuervorrichtung ferner bestimmt, bevor sich die STA von dem durch den ersten AP abgedeckten Bereich zu dem durch den zweiten AP abgedeckten Bereich bewegt, dass ein Empfangssignalstärkeindikator RSSI der STA abnimmt, und basierend auf RSSIs einer Vielzahl von APs bestimmt, dass die STA zu dem zweiten AP roamen soll.

12. Verfahren nach einem der Ansprüche 2 bis 11, wobei vor dem Empfangen (S407, S707) des zweiten Assoziationsanforderungspakets, das von der STA gesendet wird, durch den zweiten AP der erste AP ferner der STA anzeigt, zu dem zweiten AP zu wechseln; und nachdem die STA das Umschalten zu dem zweiten AP akzeptiert, der erste AP ferner an die Hauptsteuervorrichtung Informationen sendet, die anzeigen, dass die STA aus dem ersten AP migriert ist.

13. Verfahren nach einem der Ansprüche 1 bis 12, wobei der zweite AP basierend auf einer Kennung, die von der STA ist und die in dem zweiten Assoziationsanforderungspaket ist, die Hauptsteuervorrichtung abfragt, um zu bestimmen, ob die STA die STA ist, die auf den von der Hauptsteuervorrichtung gesteuerten AP zugegriffen hat.

14. Roaming-Verfahren, das durch eine Station, STA, durchgeführt wird, wobei das Verfahren umfasst:
Senden eines ersten Assoziationsanforderungspakets an einen ersten Zugangspunkt, AP, nach dem Senden des ersten Assoziationsanforderungspakets an den ersten AP, Empfangen (S404, S704) einer ersten Zufallszahl, einer zweiten Zufallszahl und einer AP-Adresse von dem ersten AP;
unter Verwendung der ersten Zufallszahl, der zweiten Zufallszahl und der AP-Adresse zum Erzeugen eines paarweisen transienten Schlüssels, PTK;
Kommunizieren mit dem ersten AP basierend auf dem PTK;
wenn sich die STA von einem durch den ersten AP abgedeckten Bereich zu einem durch einen zweiten AP abgedeckten Bereich bewegt, Senden (S407, S707) eines zweiten Assoziationsanforderungspakets an den zweiten AP, wobei das zweite Assoziationsanforderungspaket Indikationsinformationen trägt, und die Indikationsinformationen von dem zweiten AP zu verwenden sind, um zu bestimmen, dass die STA eine STA ist, die auf den ersten AP zugegriffen hat;
Empfangen (S409, S709) eines Assoziationsantwortpakets von dem zweiten AP, wobei das Assoziationsantwortpaket anzeigt, dass die STA auf den zweiten AP zugegriffen hat; und
Kommunizieren (S410, S710) mit dem zweiten AP basierend auf dem PTK, wobei der PTK, der von der STA zur Kommunikation mit dem zweiten AP verwendet wird, derselbe ist wie der PTK, der von der STA zur Kommunikation mit dem ersten AP verwendet wird.

15. Rechenvorrichtung, die konfiguriert ist, um das Verfahren nach Anspruch 1 oder 14 durchzuführen.

## Revendications

1. Procédé d'itinérance, comprenant :
la réception (S402, S702), par un second point d'accès, AP, d'informations clés en provenance d'un dispositif de commande principal, dans lequel les informations clés comprennent un premier nombre aléatoire, un second nombre aléatoire, une adresse AP, et une clé maîtresse par paire, PMK, dans lequel le second AP est commandé par le dispositif de commande principal ;
la génération, par le second AP, d'une clé transitoire par paire, PTK, sur la base des informations clés, de sorte que la PTK générée est la même qu'une PTK générée par un premier AP commandé par le dispositif de commande principal ;
la réception (S407, S707), par le second AP, d'un second paquet de demandes d'association en provenance d'une station, STA ;
le fait de déterminer (S408, S708), par le second AP, que la STA est une STA qui a accédé au premier AP ;
l'envoi (S409, S709), par le second AP, d'un second paquet de réponses d'association à la STA, dans lequel le second paquet de réponses d'association indique que la STA a accédé au second AP ; et
la communication (S410, S710), par le second AP, avec la STA sur la base de la PTK.

2. Procédé selon la revendication 1, comprenant en outre :
la génération (S401, S701), par le dispositif de commande principal, des informations clés ;
l'envoi (S402, S702), par le dispositif de commande principal, des informations clés au premier AP et au second AP ;
la réception (S402, S702), par le premier AP, des informations clés en provenance du dispositif de commande principal ;
la génération (S403, S703), par le premier AP, de la PTK sur la base des informations clés, dans lequel le premier AP génère la PTK séparément du second AP ; et
l'envoi (S404, S704), par le premier AP, du premier nombre aléatoire, du second nombre aléatoire et de l'adresse AP à la STA après réception d'un premier paquet de demandes d'association en provenance de la STA, dans lequel le premier nombre aléatoire, le second nombre aléatoire et l'adresse AP sont utilisés par la STA pour générer la PTK, dans lequel la PTK générée par la STA est la même que la PTK générée par chacun du premier AP et du second AP ; et
dans lequel le second AP reçoit (S407, S707) le second paquet de demandes d'association en provenance de la STA lorsque la STA se déplace (S406, S706) d'une zone couverte par le premier AP vers une zone couverte par le second AP.

3. Procédé selon la revendication 2, dans lequel le premier AP envoie (S404, S704) le second nombre aléatoire et l'adresse AP à la STA par l'intermédiaire d'un premier paquet de réponses d'association, et envoie (S404, S704) le premier nombre aléatoire à la STA selon un protocole d'authentification extensible sur LAN EAPoL.

4. Procédé selon la revendication 2, dans lequel l'envoi, par le premier AP, du premier nombre aléatoire, du second nombre aléatoire, et de l'adresse AP à la STA après réception d'un premier paquet de demandes d'association en provenance de la STA comprend :
le transfert (S704), par le dispositif de commande principal, du premier nombre aléatoire, du second nombre aléatoire et de l'adresse AP à la STA par l'intermédiaire du premier AP après que le premier AP reçoit le premier paquet de demandes d'association en provenance de la STA.

5. Procédé selon la revendication 4, dans lequel le dispositif de commande principal envoie (S704) le second nombre aléatoire et l'adresse AP à la STA par l'intermédiaire d'un premier paquet de réponses d'association, et envoie (S704) le premier nombre aléatoire à la STA selon un protocole d'authentification extensible sur LAN EAPoL.

6. Procédé selon l'une quelconque des revendications 1 à 5, dans lequel le second paquet de demandes d'association contient des informations indiquant que la STA demande un accès rapide.

7. Procédé selon l'une quelconque des revendications 1 à 6, dans lequel le second paquet de réponses d'association contient des informations indiquant que le second AP permet l'accès rapide à la STA.

8. Procédé selon l'une quelconque des revendications 1 à 7, dans lequel l'adresse AP est une adresse de commande d'accès au support MAC du dispositif de commande principal, ou l'adresse AP est une adresse préconfigurée.

9. Procédé selon l'une quelconque des revendications 2 à 8, dans lequel le premier AP et le second AP génèrent en outre séparément (S403, S703) la PTK sur la base d'une adresse STA de la STA ; le premier AP obtient l'adresse STA lorsque la STA accède au premier AP ; et le second AP obtient l'adresse STA par l'intermédiaire du second paquet de demandes d'association, ou obtient l'adresse STA par l'intermédiaire du dispositif de commande principal.

10. Procédé selon l'une quelconque des revendications 9, dans lequel la STA génère en outre la PTK sur la base de l'adresse STA de la STA et d'une entrée PMK par un utilisateur, dans lequel l'entrée PMK par l'utilisateur est la même que la PMK générée par le dispositif de commande principal.

11. Procédé selon l'une quelconque des revendications 2 à 10, dans lequel le dispositif de commande principal détermine en outre, avant que la STA ne se déplace de la zone couverte par le premier AP à la zone couverte par le second AP, qu'un indicateur d'intensité de signal reçu RSSI de la STA diminue, et détermine, sur la base des RSSI d'une pluralité d'AP, que la STA doit réaliser une itinérance vers le second AP.

12. Procédé selon l'une quelconque des revendications 2 à 11, dans lequel, avant que le second AP reçoive (S407, S707) le second paquet de demandes d'association envoyé par la STA, le premier AP indique en outre à la STA de commuter vers le second AP ; et après que la STA accepte la commutation vers le second AP, le premier AP envoie en outre, au dispositif de commande principal, des informations indiquant que la STA a migré hors du premier AP.

13. Procédé selon l'une quelconque des revendications 1 à 12, dans lequel le second AP interroge, sur la base d'un identifiant qui appartient à la STA et qui se trouve dans le second paquet de demandes d'association, le dispositif de commande principal pour déterminer si la STA est la STA qui a accédé à l'AP commandé par le dispositif de commande principal.

14. Procédé d'itinérance réalisé par une station, STA, le procédé comprenant :
l'envoi d'un premier paquet de demandes d'association à un premier point d'accès, AP, après l'envoi du premier paquet de demandes d'association au premier AP, la réception (S404, S704) d'un premier nombre aléatoire, d'un second nombre aléatoire et d'une adresse AP en provenance du premier AP ;
l'utilisation du premier nombre aléatoire, du second nombre aléatoire et de l'adresse AP pour générer une clé transitoire par paire, PTK ;
la communication avec le premier AP sur la base de la PTK ;
lorsque la STA se déplace d'une zone couverte par le premier AP à une zone couverte par un second AP, l'envoi (S407, S707) d'un second paquet de demandes d'association au second AP, dans lequel le second paquet de demandes d'association contient des informations d'indication, et les informations d'indication doivent être utilisées par le second AP pour déterminer que la STA est une STA qui a accédé au premier AP ;
la réception (S409, S709) d'un paquet de réponses d'association en provenance du second AP, dans lequel le paquet de réponses d'association indique que la STA a accédé au second AP ; et
la communication (S410, S710) avec le second AP sur la base de la PTK, dans lequel la PTK utilisée par la STA pour communiquer avec le second AP est la même que la PTK utilisée par la STA pour communiquer avec le premier AP.

15. Dispositif informatique configuré pour réaliser le procédé selon la revendication 1 ou 14.
